**Europäisches Patentamt**

**European Patent Office**

**Office européen des brevets**

(19)

(11) Veröffentlichungsnummer: **0 043 077**

**A1**

(12)

# EUROPÄISCHE PATENTANMELDUNG

(21) Anmeldenummer: **81104831.3**

(22) Anmeldetag: **23.06.81**

(51) Int. Cl.³: **C 03 C 17/32**
**B 05 B 13/02, B 05 C 13/02**
**B 05 D 7/26**

(30) Priorität: **28.06.80 DE 3024564**

(43) Veröffentlichungstag der Anmeldung:
**06.01.82 Patentblatt 82/1**

(84) Benannte Vertragsstaaten:
**AT BE CH FR GB IT LI NL SE**

(71) Anmelder: **VEBA-GLAS Aktiengesellschaft
Ruhrglasstrasse 50
D-4300 Essen 12(DE)**

(72) Erfinder: **Studt, Günter, Dipl.-CHem.
Hafkesdell 4
D-4300 Essen 18(DE)**

(72) Erfinder: **Pohl, Bruno
Am Arlenkamp 12
D-4300 Essen 12(DE)**

(74) Vertreter: **Spalthoff, Adolf, Dipl.-Ing.
Pelmanstrasse 31 P.O. Box 34 02 20
D-4300 Essen 1(DE)**

(54) Verfahren und Vorrichtung zum Beschichten der Aussenflächen von Glasflaschen.

(57) Die Erfindung betrifft ein Verfahren und eine Vorrichtung zum Beschichten der Außenflächen von Glasflaschen mit Kunststoff sowie einen Beschichtungsbalken, wobei eine oder mehrere Glasflaschen in waagerechter Lage unter den Beschichtungsbalken gebracht und in Drehung versetzt werden. Die Aufbringung des Überzuges geschieht in einfacher und schneller Weise, und zwar in einer genau vorgegebenen Schichtdicke bei gleichzeitig niedrigem Energie- und Apparateaufwand. Erfindungsgemäß findet als Beschichtungsmaterial ein bereits vorgehärteter Kunststoff Verwendung. Die Viskosität des Beschichtungsmaterials ist veränderbar. Vorrichtungsgemäß ist ein Rahmen (1) vorhanden, an dessen einem Ende sich eine Aufnahme (2) zur Halterung der Mündungen und and dessen anderem Ende sich eine Halterung (3) zur Aufnahme der Böden der Flaschen (4) befindet, wobei mindestens eine der Aufnahmen (3) im Rahmen (1) verschiebbar angeordnet ist. Beim Beschichtungsbalken sind die Düsen (9) von einer senkrechten Position in Winkellagen verschwenkbar. Für den eigentlichen Beschichtungsvorgang ist die Lage der Düsen (9) feststellbar.

"Verfahren und Vorrichtung zum Beschichten der Außenflächen
von Glasflaschen"

---

Die Erfindung betrifft ein Verfahren und eine Vorrichtung zum
Beschichten der Außenflächen von Glasflaschen mit Kunststoff,
bei welchem eine oder mehrere Glasflaschen in waagerechter Lage unter einen Beschichtungsbalken od.dgl. gebracht und in
Drehung versetzt werden.

Es sind verschiedene Methoden zum Auftragen fester oder flüssiger Kunststoffmaterialien auf Flaschen bekannt, um einen fest
haftenden und dauerhaften Film zum Schutze der Flaschen zu erzeugen.

Zum Auftragen einer flüssigen Phase ist es bekannt, diese durch
Sprühen, Spritzen, Schleudern oder Tauchen aufzubringen. Die
Verwendung eines flüssigen Beschichtungsmaterials ist jedoch
mit wesentlichen Nachteilen behaftet. So erfordert diese einmal vergleichsweise lange Aushärtezeiten mit der Gefahr des Verlaufens des Beschichtungsmaterials und damit Auftreten von Ungleichmäßigkeiten in der Schichtdicke. Zum anderen besteht die
Gefahr der Aufnahme von Fremdkörpern, beispielsweise Staub, solange, bis der flüssige Kunststoff noch nicht abgebunden ist,
wobei außerdem eine Bläschenbildung aufgrund von Gasreaktionen
im Beschichtungswerkstoff auftreten können.

Von diesem Stand der Technik ausgehend liegt der Erfindung
die Aufgabe zugrunde, ein Verfahren und eine Vorrichtung der
eingangs genannten Art zu schaffen, welche die Aufbringung
eines Überzuges auf zu beschichtende Glasflaschen in einfacher
und schneller Weise ermöglichen, und zwar in einer genau vorgegebenen Schichtdicke bei gleichzeitig niedrigem Energie-
und Apparateaufwand.

Gemäß der Erfindung wird dies dadurch erreicht, daß als Beschichtungsmaterial ein bereits vorgehärteter Kunststoff Verwendung findet. Die Viskosität des Beschichtungsmaterials ist veränderbar, beispielsweise durch Einstellen des Vernetzungsgrades. Die Zufuhr des Beschichtungsmaterials ist derart gesteuert, daß die Schichtdicke über den Umfang der Glasbehälter gleich ist, während diese über die Länge der Glasbehälter unterschiedlich sein kann. Durch die erfindungsgemäße Lehre wird erreicht, daß das auf die Flaschen aufzubringende Beschichtungsmaterial bereits vorgehärtet ist und infolgedessen der dadurch bedingten höheren Oberflächenspannung das Eindringen von Bestandteilen, wie Staub usw., verhindert wird. Die bereits vor dem Aufbringen eingeleiteten chemischen Reaktionen verhindern das Entstehen von Gasen oder anderen schädlichen Reaktionsprodukten, so daß sich insgesamt eine qualitativ hochwertige Beschichtung ergibt. Außerdem verkürzt sich die Aushärtezeit erheblich, so daß sich der Energiebedarf sowie der apparative Aufwand weiterhin vermindert, was gleichzeitig eine Leistungserhöhung darstellt.

Zur Durchführung des erfindungsgemäßen Verfahrens eignet sich besonders eine Vorrichtung, welche einen Rahmen od.dgl. aufweist, an dessen einem Ende sich eine Aufnahme zur Halterung der Flaschenmündung und an dessen anderem Ende sich eine Aufnahme zur Halterung der Flaschenböden befindet, wobei mindestens eine der Aufnahmen im Rahmen verschiebbar angeordnet ist. Durch die Verschiebung mindestens der einen Halterung ergibt sich eine leichte und schnelle Ein- bzw. Ausspannmöglichkeit der Flaschen, so daß die Leistung der gesamten Anordnung vergleichsweise hoch ist. Die mit den Mündungen und Böden der Flaschen in Berührung gelangenden Teile der Halterungen sind drehbar gelagert, so daß sich die Flasche bzw. Flaschen leicht drehen können und somit eine gleichmäßige Schichtdicke erzielbar ist.

Vorteilhaft sind die mit den Mündungen und Böden der Flaschen in Berührung gelangenden Teile der Halterungen so ausgebildet, daß die Mündungen und Böden der Flaschen abgedeckt sind, so daß diese völlig frei von Beschichtungsmaterial bleiben.

Die verschiebbar angeordnete Aufnahme bzw. Aufnahmen ist bzw. sind selbsttätig in ihre Ein- und Ausspannlage bringbar, was auf hydraulischem, pneumatischem, elektrischem, elektromechanischem oder mechanischem Wege erfolgen kann. Der Arbeitsablauf kann völlig selbsttätig durchgeführt werden, so daß eine hohe Durchsatzleistung möglich ist.

Gemäß einem weiteren Merkmal der Erfindung erstreckt sich diese auf einen Beschichtungsbalken zum Auftragen von Kunststoffmaterial auf die Außenflächen von Glasflaschen, welcher mit mehreren Austrittsdüsen für das Beschichtungsmaterial ausgerüstet ist. Die Düsen sind von einer senkrechten Position in Winkellagen einstellbar, und zwar können diese sowohl nach der einen als auch nach der anderen Seite verschwenkt werden, so daß eine gute Anpassungsmöglichkeit gegeben ist. Die Lage der Düsen ist während des Beschichtungsvorganges feststellbar, was beispielsweise auf mechanischem oder aber auch elektrischem Wege erfolgen kann.

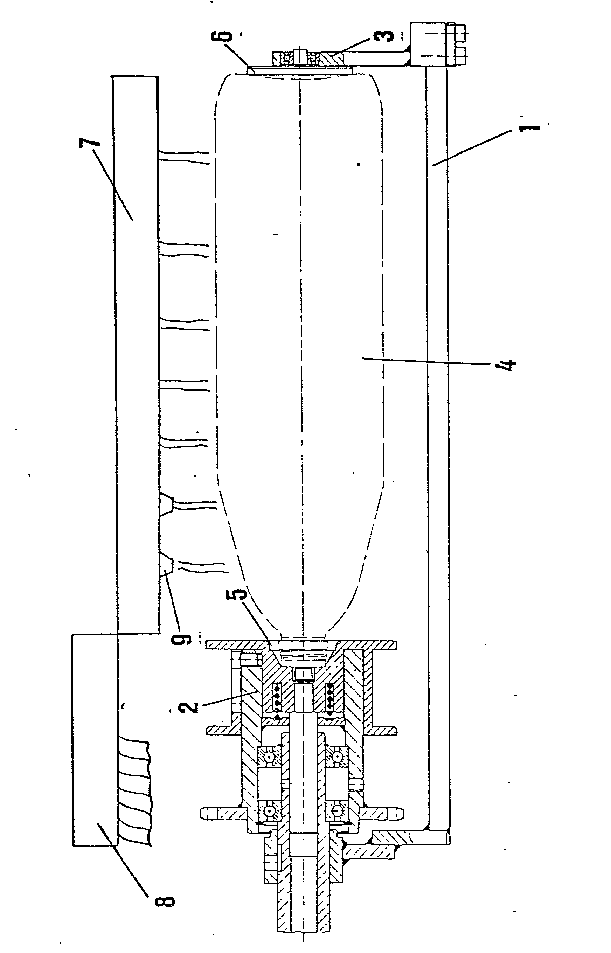

Ein Ausführungsbeispiel der Erfindung ist an Hand der Zeichnung näher erläutert, und zwar zeigt diese eine teilweise geschnittene Ansicht der erfindungsgemäßen Beschichtungsvorrichtung.

Mit 1 ist der Rahmen bezeichnet, welcher etwa U-förmig ausgebil-

Dipl.-Ing. A. Spalthoff, Patentanwalt, 43 Essen          0043077

- 4 -

det ist. An dem einen Ende des Rahmens 1 befindet sich eine Aufnahme 2 zur Halterung der Mündungen und an dem anderen Ende eine Aufnahme 3 zur Halterung der Böden der Flasche 4. Die Aufnahme 3 ist verschiebbar im Rahmen 1 angeordnet, so daß die Vorrichtung auf verschiedene Flaschenhöhen einstellbar ist. Die Verschiebung kann in herkömmlicher Weise auf mechanischem, elektrischem, hydraulischem, pneumatischem Wege usw. erfolgen.

Die mit den Mündungen und Böden der Flaschen 4 in Berührung gelangenden Teile 5,6 der Halterungen 2,3 sind drehbar gelagert, so daß die Flaschen 4 in horizontaler Lage in Rotation versetzt werden können. Die Art des Drehantriebes ist beliebig. Die Teile 5,6 der Halterungen sind so ausgeführt, daß die Mündungen und Böden der Flaschen 4 abgedeckt sind, d.h. daß kein Beschichtungsmaterial mit diesen in Berührung gelangen kann.

Oberhalb des Rahmens 1 und der darin eingespannten Flasche 4 befindet sich ein Beschichtungsbalken 7, der an einen Vorratsbehälter 8 für das Beschichtungsmaterial angeschlossen ist. Aus dem Vorratsbehälter 8 verteilt sich das Beschichtungsmaterial über die ganze Länge des Beschichtungsbalkens 7, der an seiner Unterseite mit einer Anzahl von Düsen 9 ausgerüstet ist. Die Düsen 9 sind im Beschichtungsbalken 7 schwenkbar angeordnet, und zwar können diese, ausgehend von einer senkrechten Position, nach beiden Seiten hin in Winkelstellungen verschwenkt werden. Die jeweils eingestellte Lage der Düsen ist verriegelbar, so daß während des Beschichtungsvorganges die Düsen 9 ihre einmal eingestellte Lage unverändert beibehalten.

Das verwendete Beschichtungsmaterial ist bereits vorgehärteter
Kunststoff, welcher aus dem Beschichtungsbalken 7 auf die Außenfläche der Flasche 4 aufläuft und infolge deren Drehung gleichmäßig über den gesamten Umfang verteilt wird.

PATENTANSPRÜCHE :

1. Verfahren zum Beschichten der Außenflächen von Glasflaschen
mit Kunststoff, bei welchem eine oder mehrere Glasflaschen in
waagerechter Lage unter einen Beschichtungsbalken od.dgl. gebracht und in Drehung versetzt werden, dadurch gekennzeichnet,
daß als Beschichtungsmaterial ein bereits vorgehärteter Kunststoff Verwendung findet.

2. Verfahren nach Anspruch 1, dadurch gekennzeichnet, daß die
Viskosität des Beschichtungsmaterials veränderbar ist.

3. Verfahren nach Anspruch 2, dadurch gekennzeichnet, daß die
Viskosität des Beschichtungsmaterials durch Einstellen des Vernetzungsgrades veränderbar ist.

4. Verfahren nach Anspruch 1 und/oder einem oder mehreren der
folgenden, dadurch gekennzeichnet, daß die Zufuhr des Beschichtungsmaterials derart gesteuert ist, daß die Schichtdicke
über den Umfang der Glasflaschen (4) gleich ist.

5. Verfahren nach Anspruch 1 und/oder einem oder mehreren
der folgenden, dadurch gekennzeichnet, daß die Zufuhr des
Beschichtungsmaterials derart gesteuert ist, daß die Schichtdicke über die Länge der Glasbehälter (4) unterschiedlich ist.

Dipl.-Ing. A. Spalthoff, Patentanwalt, 43 Essen

- 7 -

6. Vorrichtung zum Beschichten der Außenflächen von Glasflaschen
mit Kunststoff, bei welcher ein oder mehrere Glasflaschen in waagerechter Lage unter einen Beschichtungsbalken od.dgl. gebracht
und in Drehung versetzt werden, insbesondere zur Durchführung des
Verfahrens nach Anspruch 1 und/oder einem oder mehreren der folgenden, dadurch gekennzeichnet, daß diese einen Rahmen (1) od.dgl.
aufweist, an dessen einem Ende sich eine Aufnahme (2) zur Halterung
der Mündungen und an dessen anderem Ende sich eine Halterung (3)
zur Aufnahme der Böden der Flaschen (4) befindet, wobei mindestens
eine der Aufnahmen (3) im Rahmen (1) verschiebbar angeordnet ist.

7. Vorrichtung nach Amspruch 6, dadurch gekennzeichnet, daß die
mit den Mündungen und Böden der Flaschen (4) in Berührung gelangenden Teile (5,6) der Halterungen (2,3) drehbar gelagert sind.

8. Vorrichtung nach Anspruch 6, dadurch gekennzeichnet, daß die
mit den Mündungen und Böden der Flaschen (4) in Berührung gelangenden Teile (5,6) der Halterungen (2,3) so ausgebildet sind,
daß die Mündungen und Böden der Flaschen (4) abgedeckt sind.

9. Vorrichtung nach Anspruch 6 und/oder einem oder mehreren
der folgenden, dadurch gekennzeichnet, daß die verschiebbar
angeordnete Aufnahme (3) bzw. Aufnahmen selbsttätig in die
Ein- und Ausspannlage der Flaschen (4) bringbar ist bzw. sind.

10. Beschichtungsbalken zum Auftragen von Kunststoffmaterial
auf die Außenflächen von Glasflaschen, welcher mit mehreren Austrittsdüsen für das Beschichtungsmaterial ausgerüstet ist, insbesondere zur Durchführung des Verfahrens nach Anspruch 1 und/
oder einem oder mehreren der folgenden, <u>dadurch gekennzeichnet</u>,
daß die Düsen (9) von einer senkrechten Position in Winkellagen
verschwenkbar sind.


11. Beschichtungsbalken nach Anspruch 10, <u>dadurch gekennzeichnet</u>,
daß die Lage der Düsen (9) für den Beschichtungsvorgang feststellbar ist.

0043077

0043077

Nummer der Anmeldung

EP 81104831.3

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - A1 - 2 755 029</u> (THE D.L. AULD CO.) <br><br> * Seite 16, Zeile 23 - Seite 17, Zeile 18; Seite 18 - Seite 19, Zeile 17; Fig. 3-6; Ansprüche 1,2,7 * <br><br> -- | 1,2, 4-11 |
| | <u>DE - B2 - 2 430 990</u> (MITSUI) <br> * Spalte 3, Zeile 43 - Spalte 4, Zeile 41; Fig. 1 * <br><br> ---- | 1,4, 6-11 |

### KLASSIFIKATION DER ANMELDUNG (Int Cl.3)

C 03 C 17/32
B 05 B 13/02
B 05 C 13/02
B 05 D 7/26

### RECHERCHIERTE SACHGEBIETE (Int. Cl.3)

C 03 C
B 05 B
B 05 C
B 05 D

### KATEGORIE DER GENANNTEN DOKUMENTE

X: von besonderer Bedeutung
A: technologischer Hintergrund
O: nichtschriftliche Offenbarung
P: Zwischenliteratur
T der Erfindung zugrunde liegende Theorien oder Grundsätze
E: kollidierende Anmeldung
D: in der Anmeldung angeführtes Dokument
L aus andern Gründen angeführtes Dokument
&· Mitglied der gleichen Patentfamilie, übereinstimmendes Dokument

| X | Der vorliegende Recherchenbericht wurde für alle Patentansprüche erstellt |
|---|---|

| Recherchenort | Abschlußdatum der Recherche | Prüfer |
|---|---|---|
| WIEN | 04-09-1981 | HAUSWIRTH |

EPA form 1503.1  06.78